(19) Europäisches Patentamt / European Patent Office / Office européen des brevets

(11) **EP 3 795 943 B1**

(12) **EUROPÄISCHE PATENTSCHRIFT**

(45) Veröffentlichungstag und Bekanntmachung des Hinweises auf die Patenterteilung:
**17.08.2022   Patentblatt 2022/33**

(21) Anmeldenummer: **20197323.7**

(22) Anmeldetag: **21.09.2020**

(51) Internationale Patentklassifikation (IPC):
**G01B 11/24** *(2006.01)*      **B23F 23/12** *(2006.01)*

(52) Gemeinsame Patentklassifikation (CPC):
**G01B 11/2416; B23F 23/1218; G01B 2210/50**

(54) **VORRICHTUNG UND VERFAHREN ZUR VERMESSUNG UND QUALIFIZIERUNG EINER ZAHNSTANGE**

DEVICE AND METHOD FOR MEASURING AND QUALIFYING A RACK

DISPOSITIF ET PROCÉDÉ DE MESURE ET DE QUALIFICATION D'UNE CRÉMAILLÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.09.2019   DE 202019105214 U**
**19.09.2019   DE 102019125304**

(43) Veröffentlichungstag der Anmeldung:
**24.03.2021   Patentblatt 2021/12**

(73) Patentinhaber: **Habrama GmbH**
**89155 Erbach (DE)**

(72) Erfinder:
• **BRAUNSTEFFER, Josef**
**89155 Erbach (DE)**
• **SCHMID, Reinhold**
**89155 Erbach (DE)**

(74) Vertreter: **Meyer, Thorsten**
**Meyer Patentanwaltskanzlei**
**Pfarrer-Schultes-Weg 14**
**89077 Ulm (DE)**

(56) Entgegenhaltungen:
EP-A2- 2 055 403          DE-B3-102013 211 914
DE-T5-112014 006 515    JP-A- 2016 206 104

EP 3 795 943 B1

**Beschreibung**

Die Erfindung betrifft ein Verfahren zur Vermessung und Qualifizierung einer Zahnstange um deren vom Idealmaß abweichende Torsion und Verkrümmung zu bestimmen und eine Vorrichtung hierfür.

Zahnstangen werden für unterschiedliche Anwendungen benötigt: beim Bau von Robotern und Maschinen, Stauwehren und Lenkgetrieben, überall wo eine Drehbewegung in eine lineare Bewegung umgewandelt werden soll. Eine Schrägverzahnung der Zahnstange erhöht die Belastbarkeit der Verbindung, so dass mit höheren Drehmomenten gefahren werden kann.

Man muss bei der Fertigung von Zahnstangen drei Prozesse kennen:

- Fräsen
- Schruppen
- Schlichten

Schruppen und Schlichten können unter dem Oberbegriff Schleifen zusammengefasst werden. Die Meinungen gehen hier etwas auseinander. Manche ordnen das schruppen dem Fräsen zu, aber man kann zur Unterscheidung mit metallenen Werkzeugen fräsen. Mit mineralischen Werkzeugen wird dann entsprechend geschruppt und geschlichtet.

Zuerst wird also eine Zahnstange gefräst. Hierbei wird mit einem metallenen Fräskopf das Material abgetragen. Zahnstangen geringerer Präzision sind nach diesem Durchgang fertig. Will man es nur mit Fräsen etwas genauer haben, fräst man beispielsweise mit halber Tiefe und misst nach, wie weit die eingestellte Tiefe von der tatsächlichen abweicht. Das kann man als Korrekturfaktor in die Maschine eingeben und fertig fräsen. Das Fräsen verursacht einen hohen Temperatureintrag und bewirkt durch hohe Kräfte elastische Verformung an Maschine und Werkstück. Dadurch sind gefräste Zahnstangen nie sehr präzise. Die Zahnstange wird noch gerichtet (geradegebogen) und ist dann einsatzbereit. In einzelnen Fällen werden nur gefräste Zahnstangen auch gehärtet, das ist aber eher unüblich.

Soll das Ergebnis besser, also die Verkrümmung und Torsion minimiert sein, wird so gefräst, dass der Zahngrund bereits fertig ist (größte Materialbelastung) und die Flanken und Köpfe etwas weniger abgetragen sind. Dann wird die Stange gehärtet, die Seiten geschliffen und die Stange gerichtet. Danach wird die Oberseite geschliffen. Mit einer mineralischen Scheibe wird der Zahnstange die genaue Form gegeben. Nicht so präzise Zahnstangen werden in einem Durchgang geschliffen. Präzisere Zahnstangen erhält man indem man zuerst schruppt und dann schlichtet. Zwischen diesen beiden Vorgängen wird die Zahnstange außerhalb der Maschine 24 Stunden gelagert, um jegliche Temperatur im Inneren und jegliche anderweitigen Verspannungen abzubauen. Beim Schlichten wird die Zahnstange nur minimal bearbeitet um den Verzug so gering wie möglich zu halten.

Beim Schleifen wird ein rundes Werkzeug (mineralische Schleifscheibe) einer gewissen Breite x immer wieder über die Zahnstange geführt und in bestimmten Zeitabschnitten abgerichtet.

Dabei ist eine Zahnstange meist mehrfach so lang wie die Schleifscheibenbreite, das bedeutet sie muss in mehreren Durchgängen durch Verfahren der Schleifscheibe geschliffen werden. Fehler können hierbei folgendermaßen entstehen (selbst wenn man davon ausgeht, dass die Positionierung perfekt wäre):

1. Das Werkzeug ist nicht perfekt abgerichtet. Hierbei kann das Zahnstangenprofil insgesamt zu tief oder zu hoch geschliffen werden.

2. Das Werkzeug ist unregelmäßig und ein oder mehrere Zähne sind anders als der Rest (Tiefe, Breite, Versatz)

3. Das Werkzeug wird beim versetzen nicht genau positioniert. Ein Zahnkopf zwischendrin ist also zu breit oder zu schmal.

Um die Fehler so klein wie möglich zu halten wird die erste Charge Zahnstangen vermessen, um daraus Einstellungen für die Schleifmaschine zu erhalten, die die nächste Charge Zahnstangen genauer machen. Das ist nötig, um möglichst viele Zahnstangen höherer Güteklasse zu erhalten. Die produzierten Zahnstangen verursachen materialbedingt nämlich folgende Probleme:

1. Die Zahnstangen müssen alle bei einer bestimmten Temperatur gefertigt werden. Dabei gibt es durchaus Abweichungen, die aufgrund sommerlicher oder winterlicher Temperaturen auftreten, oder gar, weil die Maschine erst frisch hochgefahren wurde und noch nicht ganz durchgewärmt ist (Kühlmittel wird auf konstanter Temperatur gehalten). Diese Temperaturunterschiede können nicht erfasst werden und vorab als Korrekturparameter in die Maschine eingegeben werden, da die Fehlerquellen zu vielfältig sind (jede Achse für sich, die Auflagefläche und genauso das Werkstück selbst werden von der unterschiedlichen Temperatur beeinflusst)

2. Das Ausgangsmaterial unterliegt herstellungsbedingt Schwankungen, die nicht erfasst werden können. Selbst innerhalb einer Charge ist jede Zahnstange bei exakt gleicher Behandlung im Endergebnis unterschiedlich. Auch dies kann nicht mit vernünftigem Aufwand und zerstörungsfrei vorab erfasst werden.

3. Das Härten kann nicht hochpräzise wiederholbar mit perfekt gleichem Ergebnis eingestellt werden. Auch hier spielen Temperaturen und Materialeigenschaften eine Rolle.

4. Die Zahnstange wird nach dem Härten gerichtet, um Verzug zu kompensieren. Das Richten ist unmöglich zu perfektionieren. Es wird immer Ungenauigkeiten geben.

Es bleibt als gravierendster Faktor, um die Qualität der Produkte zu erhöhen, das Messen der bereits gefertigten Zahnstangen und das vom Messergebnis abgeleitete Anpassen der Fertigungsparameter. Dabei gibt es folgende Probleme:

1. Die üblichen taktilen Messverfahren sind langsam. Eine Zahnstange zu vermessen dauert erheblich länger (Minimum 30 Minuten) als die Herstellung (3 Minuten). In dieser Zeit kann sich die Maschine wieder abgekühlt haben und die nachfolgenden Zahnstangen werden wieder anders. Die Messzeit muss also im Bereich der Fertigungszeit liegen. Nur dann könnte nicht nur nach einer Charge, sondern vielleicht jede Zahnstange nach der Fertigung gemessen werden und Korrekturparameter sogar innerhalb der Charge eingegeben werden. Ein Messen während der Fertigung oder direkt nach der Fertigung in der Maschine ist aus verschiedenen Gründen nicht möglich:

Das Ausspannen des Werkstückes aus der Maschine (lösen des Schraubstockes / der Spannung) kann allein schon eine Verkürzung um 50 $\mu$m auf einen Meter bewirken.

Kühlwasser spritzt in alle Richtungen und das wäre dem Messkopf nicht zuträglich.

Die Stange muss nach der Fertigung eine gewisse Zeit ruhen, um sich zu entspannen und abzukühlen.

2. Eine Zahnstange zu vermessen ist aufwändig. Um die Teilung und den Schrägungswinkel oder die Flankenwinkel zu messen, müssen die in den Firmen vorhandenen Messmaschinen speziell programmiert werden.

3. Die derzeit bekannten taktilen Messmaschinen können maximal auf +/- 5 Mikrometer genau messen. Das reicht für manche Winkel bei kleinen Zähnen nicht aus.

4. Allein die Längung bei Erhöhung der Temperatur um ein Grad beträgt 13 $\mu$m. Ein Messen direkt nach der Bearbeitung wird nie genau, da selbst wenn sich die Stange von außen abgekühlt anfühlt sie im Inneren noch erwärmt sein kann.

Aus der EP 2 055 403 A2 ist eine Vorrichtung zur Vermessung und Qualifizierung einer Zahnstange bekannt, welche Vorrichtung einen optischen Sensor aufweist, der entlang einer Zahnstange bewegbar ist.
Aufgabe der Erfindung ist es ein verbessertes Verfahren und eine Vorrichtung zur Vermessung und Qualifizierung einer Zahnstange zur Verfügung zu stellen, bei der die Auswertung schnell möglich ist.
Diese Aufgabe wird durch eine Vorrichtung zur Vermessung und Qualifizierung einer Zahnstange nach den Merkmalen des Anspruchs 1 und ein Verfahren zur Vermessung und Qualifizierung einer Zahnstange nach den Merkmalen des Anspruchs 7 gelöst.
Nach einem ersten Aspekt der Erfindung ist eine Vorrichtung zur Vermessung und Qualifizierung einer auf einer Seite eine Verzahnung aufweisenden Zahnstange, welche Vorrichtung einen optischen Sensor zur Erfassung der geometrischen Daten der Zahnstange, eine Mess-Mechanik zum Verfahren des optischen Sensors entlang der Zahnstange und eine Auswerteeinheit aufweist, und welche Vorrichtung dazu ausgebildet ist, vorgeschlagen, die folgenden Schritte auszuführen:
die Zahnstange wird entlang ihres Verlaufs optisch durch den von der Zahnstange beabstandeten optischen Sensor abgetastet, wobei in

- einem ersten Vermessungsschritt die Zahnstange ungespannt liegend in wenigstens einer Spur entlang des Verlaufs derselben zur Erfassung der Verdrehungen und Verbiegungen der Zahnstange vermessen wird und in
- einem zweiten Vermessungsschritt die Zahnstange mechanisch oder magnetisch in einer definierten Lage eingespannt bzw. gespannt gegen eine definierte Fläche liegend zur Entfernung von Verdrehungen und Verwindungen in wenigstens einer Spur entlang des Verlaufs derselben vermessen wird;

wobei die Auswerteeinrichtung ausgebildet ist, den ersten Vermessungsschritt mit dem zweiten Vermessungsschritt in einem Differenzverfahren zu verrechnen, wodurch die vom Idealmaß abweichende Torsion und Krümmung der Zahnstange errechnet wird.

Eine besonders bevorzugte Ausgestaltung sieht vor, dass der optische Sensor vermittels einer Mess-Mechanik entlang der Zahnstange verfahrbar und insbesondere durch einen Interferenz-Messkopf ausgestaltet ist.

Vorteilhafterweise weist die Vorrichtung einen ebenen Messtisch mit einer Anlagekante auf, und der optische Sensor ist vermittels einer Mess-Mechanik entlang dem Messtisch verfahrbar ausgestaltet.

Zur definierten Klemmung und Halterung einer Zahnstange unter einer reproduzierbaren vorwählbaren Kraft gegen den ebenen Messtisch und die Anlagekante weist die Vorrichtung von Vorteil einen elektrischen Magneten auf, der ein Magnetfeld auf eine zu vermessende Zahnstange zu beaufschlagen vermag.

Von Vorteil sind mehrere Sensoren bzw. Messköpfe vorgesehen, um Zeit bei der Messung zu sparen und Daten parallel in einer Messfahrt erfassen zu können.

Nach einem weiteren Aspekt der Erfindung sieht erfindungsgemäß das Verfahren vor,

dass die Zahnstange entlang ihres Verlaufs optisch durch einen von der Zahnstange beabstandeten optischen Sensor zur Erfassung der geometrischen Daten der Zahnstange abgetastet wird, wobei in

- einem ersten Vermessungsschritt die Zahnstange ungespannt liegend in wenigstens einer Spur entlang des Verlaufs derselben zur Erfassung der Verdrehungen und Verbiegungen der Zahnstange vermessen wird und in
- einem zweiten Vermessungsschritt die Zahnstange mechanisch oder magnetisch in einer definierten Lage eingespannt bzw. gespannt gegen eine definierte Fläche liegend zur Entfernung von Verdrehungen und Verwindungen in wenigstens einer Spur entlang des Verlaufs derselben vermessen wird; wobei der erste Vermessungsschritt mit dem zweiten Vermessungsschritt in einem Differenzverfahren verrechnet wird, wodurch die vom Idealmaß abweichende Torsion und Krümmung der Zahnstange errechnet wird.

Hierdurch ist auf besonders effektive Weise die Erfassung der geometrischen Daten der Zahnstange eingespannt und frei ermöglicht.

Von Vorteil werden 2 Spuren mit der Messvorrichtung gefahren. Ungespannt für die Torsion und gespannt für den Winkel und bei schrägverzahnten Zahnstangen für den Schrägungswinkel.

Ablauf:

Es werden mehrere Spuren auf der Zahnstange abgefahren und Messpunkte gesammelt. Im ungespannten Zustand zwei Spuren auf der Seite und zwei oben um Verdrehungen, Verbiegungen zu erfassen.

Anschließend wird die Zahnstange magnetisch gespannt. Dadurch werden Verdrehungen und Verwindungen entfernt. Andere Firmen, die Messmaschinen herstellen, versuchen die Verdrehung und Verbiegung herauszurechnen. Der Aufwand ist hoch und das Ergebnis sehr schlecht, wenn die angenommenen Verformungen nicht zutreffen.

Ein weiterer vorteilhafter Schritt sieht vor, dass mindestens eine Spur entlang der Verzahnungsseite und eine Spur entlang einer der Verzahnungsseite angrenzenden Seitenfläche in einer oder mehreren Vermessungsfahrt/en vermessen wird.

Ein weiterer vorteilhafter Schritt sieht vor, dass wenigstens in einem der Vermessungsschritte eine erste Vermessungsfahrt mittels des optischen Sensors von 90° gegen die zu vermessende Fläche erfolgt, und in eine zweite Vermessungsfahrt mittels des optischen Sensors unter einem Winkel kleiner oder größer als 90° gegen die zu vermessende Fläche erfolgt.

Ein weiterer vorteilhafter Schritt sieht vor, dass ein oder mehrere Sensoren angeordnet sind und als wenigstens ein Sensor ein Interferenz-Messkopf verwendet wird.

Im gespannten Zustand werden noch einmal die Messpunkte abgefahren. Danach wird folgendes gemacht:

1. Es wird über einen Algorithmus, der die Menge der Punkte in einem schmalen Band parallel zu x-Achse bestimmt, das Maximum über den Zahnköpfen bestimmt.

2. Es wird eine interpolationsgerade durch die Punkte gelegt.

3. Mit dem erhaltenen y-Achsenabschnitt wird ein neues Fenster parallel zur x-Achse berechnet (Zahngrund, m-Faktor, Radius) in dem die Flanken liegen müssen.

4. Ein weiterer Algorithmus, der zusätzlich die x-Achsen-Werte in der Breite PI * Modul /2 filtert können nun die Start- und Endpunkte der Flanken bestimmen.

5. Aus diesen Start und Endpunkten kann die Interpolierte Geradengleichung jeder Flanke berechnet werden.

6. Die Winkelhalbierende jeder dieser Geraden ist die Mitte des Zahnes beziehungsweise des Zahnstangengrundes.

7. Der Abstand der Winkelhalbierenden liefert Werte, die eine Aussage über die Qualität der Messung ermöglichen. Sie müssen in einem bestimmten Fenster zum theoretischen Abstand liegen. Sind sie zu weit Abweichend, ist bei der Messung etwas schief gegangen, oder die Zahnstange ist Ausschuss oder die Parameter wurden falsch eingegeben.

8. Einer dieser Werte (mehr aus der Mitte) wird zum Referenzpunk gemacht. An diesem Referenzpunk hängt man die theoretisch berechnete Ideale Zahnstange auf.

9. Nun lassen sich Berichte ausgeben, auf denen man die theoretische Zahnstange mit den gemessenen Punkten vergleichen kann. Neben einem Schaubild kann man Standardabweichung, Varianz und Unsicherheit der einzelnen Abschnitte darstellen mit farblicher Kodierung bezüglich der Güte der Messung.

10. Nun können die gewünschten Messwerte ausgerechnet werden, die mit den theoretischen verglichen werden. Als da wären: Rollenmaß, Zahnabstand, Teilung, Zahnstangenhöhe, Flankenwinkel, Zahnhöhe. Diese Messwerte können im Programm mit unterschiedlichen Grenzwerten versehen werden, ab denen die Zahnstange eine gewisse Güteklasse erreicht oder Ausschuss ist.

Weitere Optimierungen:

1. Um die theoretische Zahnstange über die gemessenen Punkte zu legen könnte man anstatt einen Referenzpunkt zu wählen sofort die beiden Zahnstangen übereinander legen und im halbierungsverfahren bestimmen, wann der Abstand aller Punkte zur theoretischen Zahnstange ein Minimum erreicht. Diese Berechnungen sind aufwändiger als die oben beschriebenen zur Bestimmung eines Referenzpunktes, aber das Halbierungsverfahren könnte diese Methode trotzdem schneller machen.

2. Das Halbierungsverfahren könnte auch die oben Beschriebene Bestimmung eines Referenzpunktes beschleunigen.

3. Anstatt Interpolationsgeraden zu verwenden kann man auch jeden aufeinanderfolgenden Punkt mittels einer Geraden verbinden. Dazu sollte stark abweichende Punkte vorher aussortiert werden. Diese Geraden könnten die Punkte zum Vergleich liefern, würden on the fly berechnet und wären somit schneller verfügbar.

4. Ein Schnellmessverfahren könnte nur relevante Punkte auswählen, die zu vergleichen sind: eine Zahnstange wird mit einer Schleifscheibe gewisser Breite gefertigt. Diese Schleifscheibe wird nach Bearbeitung eines Bereiches abgehoben und am anschließenden Bereich wieder aufgesetzt. Es ist also nicht möglich, dass innerhalb der Scheibenbreite großartige Veränderungen passieren. Der Abstand zwischen den Aufsetzstellen ist interessant. Und über die Zahnstange verteilt die Vermessung je eines Zahnes der Scheibe. Hat die Scheibe also 16 Zähne misst man den ersten Zahn auf der ersten Bearbeitungsbreite, den Zweiten auf der zweiten und so weiter. So wird jeder Zahn der Schleifscheibe kontrolliert und man kann trotzdem eine Verkürzung der Zähne der Schleifscheibe bestimmen, wenn man annimmt das alle Zähne gleich hoch abgerichtet sind. Die Genauigkeit kann bei Maschinen +/- 1 $\mu$m betragen.

5. Stark Abweichend Punkte könnten nach Übereinanderlegen der theoretischen Zahnstange auf die gemessenen Punkte aussortiert werden, wenn sie einen gewissen unmöglichen Abstand haben (Messabstand 40pm: ein angrenzender Punkt kann nie mehr als 40pm nach oben und unten Abweichen (das wären 45°) wenn eine Zahnstange 20° Flankensteilheit hat. Somit kann bei der Punkte-mit-Zwischengeraden-Methode vermieden werden einen Ausreißer zum Vergleich zu erwischen.

6. Um Zeit bei der Messung zu sparen könnten mehrere Messköpfe die Daten parallel erfassen.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:

Fig. 1    es sind in schematischer Darstellung gängige Zahnstangen in Gerade- und Schrägverzahnung gezeigt,

Fig. 2    eine schematische Darstellung der Parameter eines Zahns einer Zahnstange,

Fig. 3    eine schematische Darstellung der Teilung der Verzahnung einer Zahnstange,

Fig. 4    eine schematische Darstellung der Teilung der Verzahnung einer schrägverzahnten Zahnstange,

Fig. 5    eine schematische Darstellung der Rollenmaßberechnung einer Zahnstange,

Fig. 6    eine schematische Darstellung eines Messplatzes für eine Zahnstange,

Fig. 7    eine schematische Darstellung der Messstrecke an der Seite und oben an der Verzahnung der Zahnstange,

Fig. 8    eine schematische Darstellung der Zusammenwirkung des Messkopfes mit der Zahnstange über eine optische Abtastung,

Fig. 9    Detail der Messanordnung,

Fig. 10   Ergebnis der Analyse zur Abweichung.

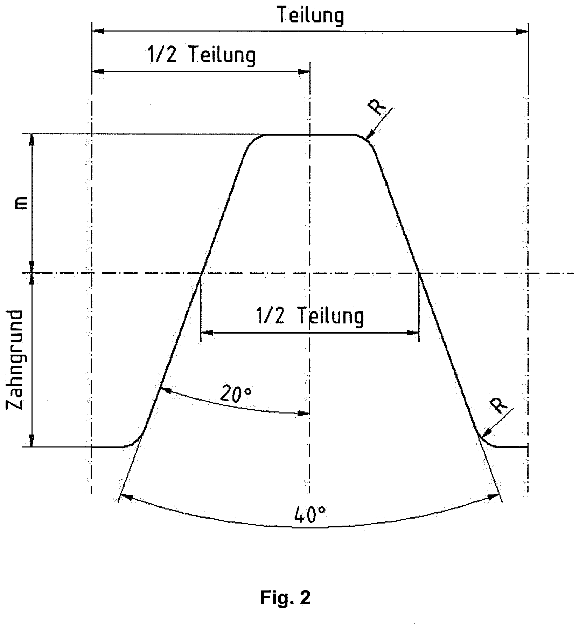

Die in den Figuren gleichen Bezugsziffern bezeichnen gleiche oder gleich wirkende Elemente.

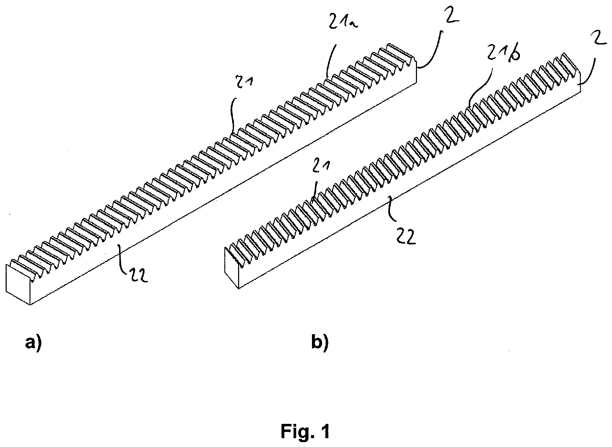

In Fig. 1 a) ist eine Zahnstange 2 mit Geradeverzahnung 21a gezeigt in Fig. 1 b) eine Schrägverzahnung 21b.
Dabei gibt es folgende Parameter (siehe auch Fig. 2): Norm-Teilung Tn: Abstand von einem Zahn einer Zahnstange zum nächsten. Tn = m * pi
Modul m in mm: Maßangabe zur Normierung von Zahnrädern

$$R = m / 5$$

$$Zahngrund = 1{,}25 * m \; (Bezugsprofil \; II \; Standard)$$

$$Zahngrund = 1{,}167 * m \; (Bezugsprofil \; I)$$

Eingriffswinkel 20° ist Standard. Es gibt aber auch Abweichungen.
Bezugsprofil: Das Bezugsprofil entspricht dem theoretischen Zahnstangenprofil, auf dem das Zahnrad spielfrei abwälzt. In der Praxis ist es die Form des Werkzeugs, mit dem das Zahnrad im Wälzfräsverfahren hergestellt wird. Das Bezugsprofil heute gebräuchlicher Zahnräder ist in DIN 867 genormt.

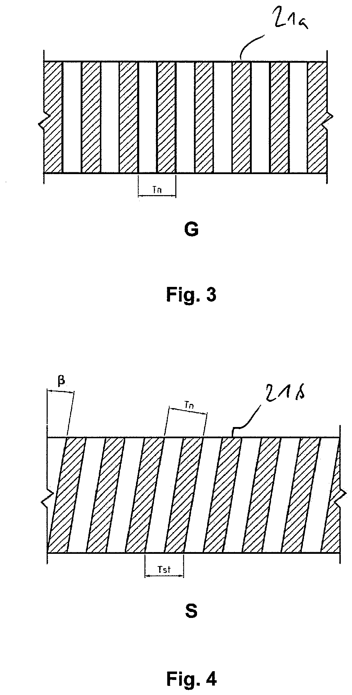

Siehe hierzu Fig. 3 (Geradeverzahnung G) und Fig. 4 (Schrägverzahnung S)

Berechnungsformel:

$$T_{st} = \frac{\text{Teilung Normal } (T_n)}{\text{Cosinus } \beta}$$

**Beispiel**

Modul 3 Schrägungswinkel 19,5281°

$$\text{Teilung Normal } (T_n) \quad 9{,}424778$$
$$\text{Cosinus } (\beta) \qquad\quad 0{,}94247766 \qquad\qquad = \text{Stirnteilung } (T_{st})$$
$$\qquad\qquad\qquad\qquad 10{,}0 \; \text{mm}$$

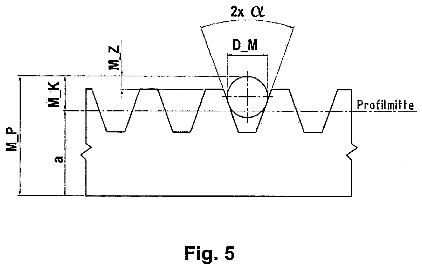

Fig. 5 Eine beispielhafte Rollenmaßberechnung mit Eingriffswinkel 20°.

$\alpha$ = Eingriffswinkel
D_M = Messrollendurchmesser
M_P = Prüfmaß
m = Modul
M_K = Rollenmaß über Profilmitte
M_Z = Rollenmaß über Zahnkopf
a = Maß von Unterseite bis Profilmitte

Formel:

$$M\_K \;=\; \frac{D\_M}{2} \;+\; \frac{D\_M}{2 \; x \; \sin \alpha} \;-\; \frac{\pi \; x \; m}{4 \; x \; \tan \alpha}$$

$$M\_P \;=\; M\_K \;+\; a$$

$$M\_Z \;=\; M\_K \;-\; m$$

**Vereinfachung bei Eingriffswinkel $\alpha$ = 20°**

$$M\_K \;=\; \frac{D\_M}{2} \;+\; \frac{D\_M}{0,6840403} \;-\; 2,1578638 \; x \; m$$

$$M\_K \;=\; 1,9619 \; x \; D\_M \;-\; 2,1578638 \; x \; m$$

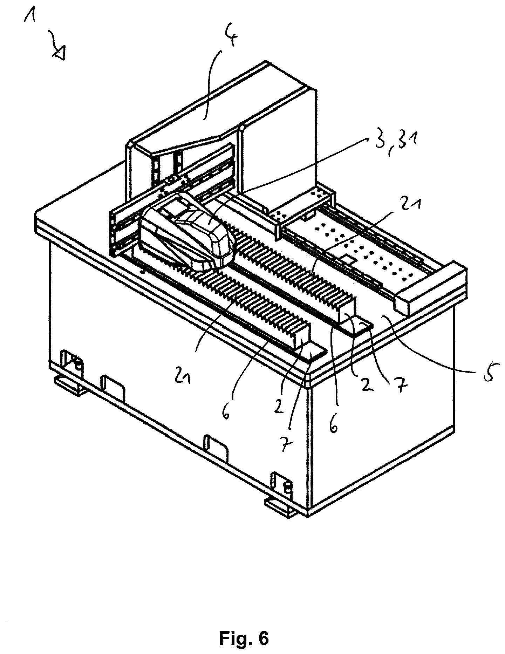

Fig. 6 zeigt eine die Zahnstangenmessmaschine 1, die an Zahnstangen 2 die Einzelteilung, Gesamtteilung, Wälzgerade (Teilkreis), Rollenmaß, Flankenwinkel (Eingriffswinkel), Schrägungswinkel, Torsion und Geradheit messen kann. Dabei kann man ein Messprotokoll zusammenstellen, das die gewünschten Daten enthält.

Eine Messung besteht aus den folgenden Abschnitten:

1. Die Zahnstange wird gereinigt.
2. Die Seite der Zahnstange wird im entspannten Zustand an der seitlichen Anlagefläche bzw. Kante 6 (Rechtwinkligkeit zur Wälzebene) in zwei Ebenen gemessen, um die Geradheit und Torsion zu erfassen.
3. Die Zahnstange wird auf den Zahnköpfen wie unter 2. gemessen.
4. Die Zahnstange wird magnetisch gespannt.
5. Der konfokale Wegmesssensor vermisst die Zähne. Es werden verschiedene Parameter errechnet und eine Exportdatei erzeugt.
6. Die exportierten Teildaten werden in einem zu entwickelnden Programm zusammengefasst, ausgewertet und zu einem Messprotokoll aufgearbeitet, das auf einem Drucker ausgegeben werden kann.

In Fig. 6 ist auch der zur definierten Klemmung und Halterung einer Zahnstange 2 unter einer vorwählbaren Kraft gegen den ebenen Messtisch 5 und die Anlagekante 6 elektrischen Magnet 7 zu sehen, der ein Magnetfeld auf eine zu vermessende Zahnstange 2 zu beaufschlagen vermag.

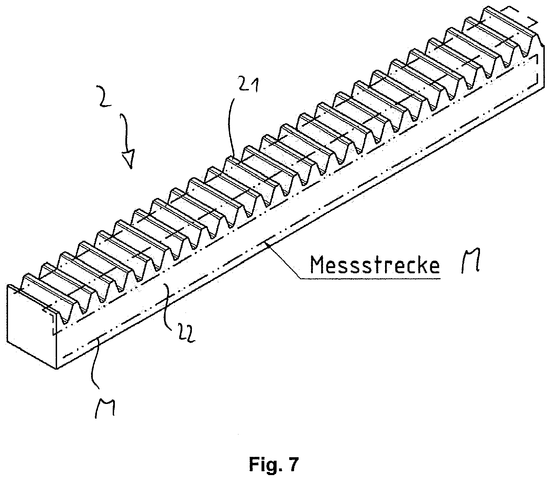

Fig. 7 zeigt: die Messstecken auf der Seitenfläche 22 und auf der Verzahnung 21 der Zahnstange 2.

Für die Messungen auf der Seite und oben wurde der Kopf schräg gestellt. Die Verzerrung wird herausgerechnet.

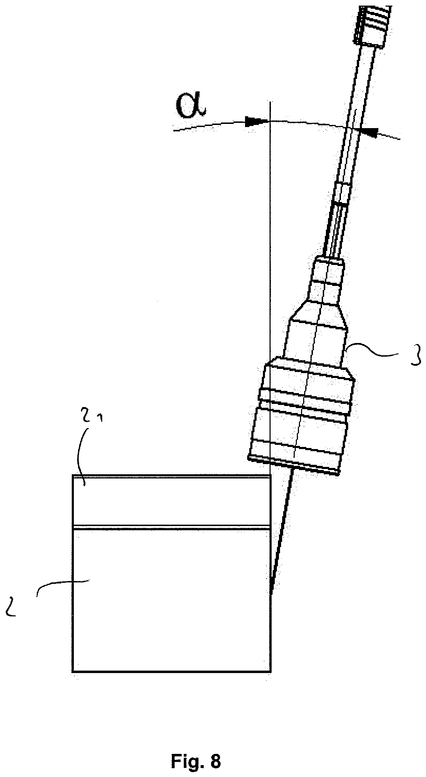

In Fig. 8 ist der Messkopf (Sensor) 3 in Messung mit einer Zahnstange 2 gezeigt.

Der gesamte Messprozess mit Ausgabe des Messprotokolls für eine Zahnstange dauert dabei nicht länger als ein bis zwei Minuten. Es können je nach Maschinengröße und Ausführung auch mehrere Zahnstangen vermessen werden, entweder werden die Zahnstangen dabei hintereinander oder bei mehreren Messpositionen nebeneinander positioniert. Die Daten könnten auch digital an Produktionsplanungs- und Steuerungssysteme (PPS) weitergegeben werden. Ebenfalls optional kann durch eine automatische Be- und Entladeeinrichtung die Messmaschine vollautomatisiert Zahnstangen vermessen, deren Messprotokolle ausgeben, mit den Produktionsplanungs- und Steuerungssystemen (PPS) kommunizieren und die nicht maßhaltigen Zahnstangen aussortieren. Dadurch kann die Messmaschine perfekt in den Ablauf der Zahnstangenproduktion eingebunden werden.

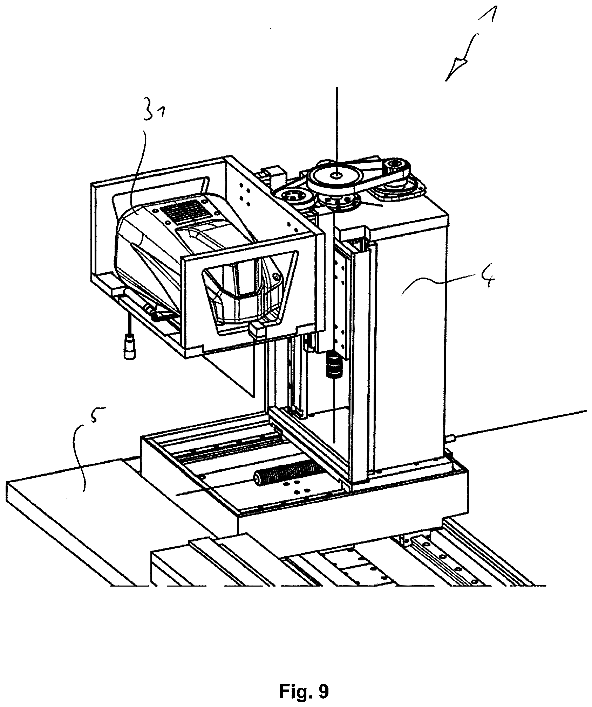

Fig. 9 zeigt den Messkopf in einer näheren Ansicht.

Grobmessung

Die erste Messung erfolgt in zwei Reihen mit Punkten auf den Zahnstangenköpfen und im entspannten Zustand. Sind die Abweichungen zu stark muss die Stange zum Richten, bevor sie gespannt wird und mit dem Keyence Messkopf gemessen wird. Mittels dieser Punkte können eine Torsion und eine Geradheit ausgewiesen werden, die wie unten abgebildet in das Protokoll einfließen.

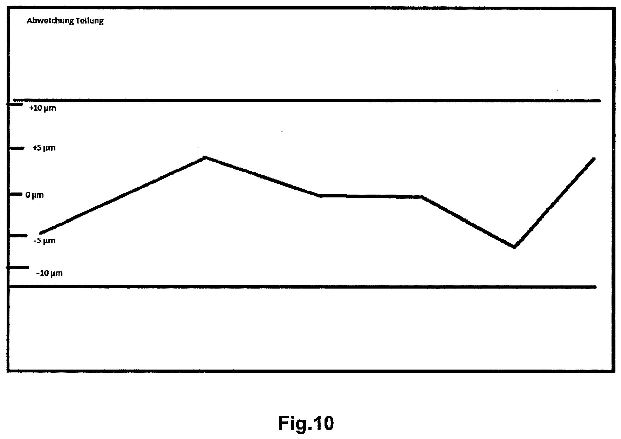

Fig. 10 zeigt ein exemplarisches Messergebnis einer Feinmessung.

Die Zahnstange wird mit einem speziellen Magneten diagonal gespannt. Dabei wird sowohl eine Verbiegung in x oder y-Richtung als auch eine Torsion gerade gezogen.

Für die Messdaten werden beispielsweise in Excel die Diagramme für das Protokoll erzeugt. Ein Diagramm soll dabei mittels zweier Linien einen einstellbaren oberen und unteren Grenzwert anzeigen. Dazwischen befindet sich dann die Messlinie. Kreuzt sie die Grenzwertlinie ist es Ausschuss, oder eine Zahnstange minderer Qualität, je nach Einstellung. Bleibt die Stange innerhalb der Linien dient das ausgedruckte Protokoll als Gütenachweis.

**Bezugszeichenliste**

1    Vorrichtung zur Vermessung

2     Zahnstange
21    Verzahnung
21a   Geradeverzahnung
22b   Schrägverzahnung
22    Seitenfläche
3     optischer Sensor
31    Interferenz-Messkopf
4     Mess-Mechanik
5     Messtisch
6     Anlagekante
M     Messstrecke

**Patentansprüche**

**1.** Vorrichtung (1) zur Vermessung und Qualifizierung einer auf einer Seite eine Verzahnung (21) aufweisenden Zahnstange (2, 2a, 2b), welche Vorrichtung einen optischen Sensor (3) zur Erfassung der geometrischen Daten der Zahnstange, eine Mess-Mechanik zum Verfahren des optischen Sensors entlang der Zahnstange und eine Auswerteeinheit aufweist, und welche Vorrichtung dazu ausgebildet ist, die folgenden Schritte auszuführen:

die Zahnstange (2, 2a, 2b) wird entlang ihres Verlaufs optisch durch den von der Zahnstange (2, 2a, 2b) beabstandeten optischen Sensor (3) abgetastet,
wobei in

- einem ersten Vermessungsschritt die Zahnstange (2, 2a, 2b) ungespannt liegend in wenigstens einer Spur entlang des Verlaufs derselben zur Erfassung der Verdrehungen und Verbiegungen der Zahnstange vermessen wird und in
- einem zweiten Vermessungsschritt die Zahnstange (2, 2a, 2b) mechanisch oder magnetisch in einer definierten Lage eingespannt bzw. gespannt gegen eine definierte Fläche liegend zur Entfernung von Verdrehungen und Verwindungen in wenigstens einer Spur entlang des Verlaufs derselben vermessen wird;

**EP 3 795 943 B1**

wobei die Auswerteeinrichtung ausgebildet ist, den ersten Vermessungsschritt mit dem zweiten Vermessungsschritt in einem Differenzverfahren zu verrechnen, wodurch die vom Idealmaß abweichende Torsion und Krümmung der Zahnstange errechnet wird.

2. Vorrichtung nach Anspruch 1, bei welcher der optische Sensor durch einen Interferenz-Messkopf (31) ausgestaltet ist.

3. Vorrichtung nach Anspruch 1 oder 2, welche einen ebenen Messtisch (5) mit einer Anlagekante (6) aufweist, und bei welcher der optische Sensor (3) vermittels der Mess-Mechanik (4) entlang dem Messtisch (5) verfahrbar ausgestaltet ist.

4. Vorrichtung nach Anspruch 3, welche zur definierten Klemmung und Halterung der Zahnstange (2, 2a, 2b) unter einer vorwählbaren Kraft gegen den ebenen Messtisch (5) und die Anlagekante (6) einen elektrischen Magneten (7) aufweist, der ein Magnetfeld auf die zu vermessende Zahnstange (2, 2a, 2b) zu beaufschlagen vermag.

5. Vorrichtung nach einem der Ansprüche 1 bis 4, **dadurch gekennzeichnet,**
**dass** mehrere Sensoren (3) bzw. Messköpfe (31) vorgesehen sind, um Zeit bei der Messung zu sparen und Daten parallel in einer Messfahrt erfassen zu können.

6. Verfahren zur Vermessung und Qualifizierung einer Zahnstange (2, 2a, 2b), mit einer Verzahnung (21) auf einer Seite derselben, insbesondere mittels einer Vorrichtung nach einem der Ansprüche 1 bis 5,

wobei die Zahnstange (2, 2a, 2b) entlang ihres Verlaufs optisch durch einen von der Zahnstange (2, 2a, 2b) beabstandeten optischen Sensor (3) zur Erfassung der geometrischen Daten der Zahnstange abgetastet wird, wobei in

- einem ersten Vermessungsschritt die Zahnstange (2, 2a, 2b) ungespannt liegend in wenigstens einer Spur entlang des Verlaufs derselben zur Erfassung der Verdrehungen und Verbiegungen der Zahnstange vermessen wird und in
- einem zweiten Vermessungsschritt die Zahnstange (2, 2a, 2b) mechanisch oder magnetisch in einer definierten Lage eingespannt bzw. gespannt gegen eine definierte Fläche liegend zur Entfernung von Verdrehungen und Verwindungen in wenigstens einer Spur entlang des Verlaufs derselben vermessen wird; wobei der erste Vermessungsschritt mit dem zweiten Vermessungsschritt in einem Differenzverfahren verrechnet wird, wodurch die vom Idealmaß abweichende Torsion und Krümmung der Zahnstange errechnet wird.

7. Verfahren nach Anspruch 6, **dadurch gekennzeichnet,**
**dass** mindestens eine Spur entlang der Verzahnungsseite (21) und eine Spur entlang einer der Verzahnungsseite angrenzenden Seitenfläche (22) in einer oder mehreren Vermessungsfahrt/en vermessen wird.

8. Verfahren nach Anspruch 6 oder 7,

**dadurch gekennzeichnet,**
**dass** wenigstens in einem der Vermessungsschritte eine erste Vermessungsfahrt mittels des optischen Sensors (2) von 90° gegen die zu vermessende Fläche erfolgt,
und in eine zweite Vermessungsfahrt mittels des optischen Sensors (2) unter einem Winkel kleiner oder größer als 90° gegen die zu vermessende Fläche erfolgt.

9. Verfahren nach einem der Ansprüche 6 bis 8, **dadurch gekennzeichnet,**
**dass** ein oder mehrere Sensoren (3) angeordnet sind und als wenigstens ein Sensor (3) ein Interferenz-Messkopf (31) verwendet wird.

**Claims**

1. Device (1) for measuring and qualifying a toothed rack (2, 2a, 2b) having teeth (21) on one side and comprising an optical sensor (3) for sensing geometric data of the toothed rack, a measuring mechanism for displacing the optical sensor along the toothed rack and a processing unit, and being configured to perform the following steps:

9

the toothed rack (2, 2a, 2b) is optically scanned along its path by the optical sensor (3) being spaced apart from the toothed rack (2, 2a, 2b), wherein in

- a first measuring step the toothed rack (2, 2a, 2b), being located slackly, is measured in at least one trace along the path thereof for sensing twists and bending of the toothed rack, and in
- a second measuring step the toothed rack (2, 2a, 2b), being mechanically or magnetically restrained or clamped in a defined position against a defined surface for removing twists and bending, is measured in at least one trace along the path thereof; wherein the processing unit is configured to compute the first measuring step with the second measuring step in a differential method, whereby the torsion and curvature of the toothed rack deviating from their ideal values are calculated.

2. The device according to claim 1, wherein the optical sensor is formed by an interference measuring head (31).

3. The device according to claim 1 or 2, comprising a flat measuring table (5) having a locating edge (6), and in which the optical sensor (3) is designed to be movable along the measuring table (5) by means of the measuring mechanism (4).

4. The device according to claim 3, comprising an electrical magnet (7) for clamping and holding the toothed rack (2, 2a, 2b) in a defined fashion with a preselectable force against the flat measuring table (5) and the locating edge (6), wherein the magnet is able to apply a magnetic field onto the toothed rack (2, 2a, 2b) to be measured.

5. The device according to any one of claims 1 to 4,
**characterized in that**
a plurality of sensors (3) or measuring heads (31) are provided, respectively, for saving time when measuring and for collecting data in one measurement run in parallel.

6. A method for measuring and qualifying a toothed rack (2, 2a, 2b) having teeth (21) on one side, in particular by means of a device according to any one of claims 1 to 5,

wherein the toothed rack (2, 2a, 2b) is optically scanned along its path by an optical sensor (3) being spaced apart from the toothed rack (2, 2a, 2b) for sensing geometric data of the toothed rack, wherein in

- a first measuring step the toothed rack (2, 2a, 2b), being located slackly, is measured in at least one trace along the path thereof for sensing twists and bending of the toothed rack, and in
- a second measuring step the toothed rack (2, 2a, 2b), being mechanically or magnetically restrained or clamped in a defined position against a defined surface for removing twists and bending, is measured in at least one trace along the path thereof; wherein the first measuring step is computed with the second measuring step in a differential method, whereby the torsion and curvature of the toothed rack deviating from their ideal values are calculated.

7. The method of claim 6,
**characterized in that**
at least one trace along the toothed side (21) and one trace along a lateral surface (22) adjacent to the toothed side are measured in one or more measurement runs.

8. The method according to claim 6 or 7,

**characterized in that**
in at least one of the measuring steps a first measurement run is performed by means of the optical sensor (2) at 90° to the surface that is to be measured,
and a second measurement run is performed by means of the optical sensor (2) at an angle smaller or larger than 90° to the surface that is to be measured.

9. The method of any one of claims 6 to 8,
**characterized in that**

one or more sensors (3) are arranged and an interference measuring head (31) is used as at least one sensor (3).

**Revendications**

1.  Dispositif (1) de mesure et de qualification d'une crémaillère (2, 2a, 2b) présentant une denture (21) sur un côté, lequel dispositif présente un capteur optique (3) pour la détection des données géométriques de la crémaillère, une mécanique de mesure pour le déplacement du capteur optique le long de la crémaillère et un module d'évaluation, et lequel dispositif est réalisé pour exécuter les étapes suivantes :

    la crémaillère (2, 2a, 2b) est balayée optiquement le long de son parcours par le capteur optique (3) écarté de la crémaillère (2, 2a, 2b),
    dans lequel dans

    - une première étape de mesure, la crémaillère (2, 2a, 2b) est mesurée à l'état détendu reposant dans au moins une piste le long du parcours de celle-ci pour la détection des torsions et déformations de la crémaillère et dans
    - une seconde étape de mesure, la crémaillère (2, 2a, 2b) est serrée ou tendue mécaniquement ou magnétiquement dans une position définie reposant contre une face définie pour l'élimination de torsions et distorsions dans au moins une piste le long du parcours de celle-ci ;

    dans lequel le dispositif d'évaluation est réalisé pour compenser la première étape de mesure avec la seconde étape de mesure dans un procédé différentiel, par lequel la torsion et courbure déviant de la mesure idéale de la crémaillère est calculée.

2.  Dispositif selon la revendication 1, dans lequel le capteur optique est configuré par une tête de mesure d'interférence (31).

3.  Dispositif selon la revendication 1 ou 2,
    qui présente une table de mesure plane (5) avec une arête d'appui (6), et dans lequel le capteur optique (3) est configuré de manière à pouvoir être déplacé le long de la table de mesure (5) au moyen de la mécanique de mesure (4).

4.  Dispositif selon la revendication 3,
    qui présente un aimant électrique (7) qui peut solliciter un champ magnétique sur la crémaillère à mesurer (2, 2a, 2b) pour le serrage et le maintien définis de la crémaillère (2, 2a, 2b) sous une force pouvant être présélectionnée contre la table de mesure plane (5) et l'arête d'appui (6).

5.  Dispositif selon une des revendications 1 à 4,
    **caractérisé en ce**
    **que** plusieurs capteurs (3) ou têtes de mesure (31) sont prévus pour économiser du temps lors de la mesure et pouvoir détecter des données parallèlement dans un trajet de mesure.

6.  Procédé de mesure et de qualification d'une crémaillère (2, 2a, 2b) avec une denture (21) sur un côté de celle-ci, notamment au moyen d'un dispositif selon une des revendications 1 à 5,

    dans lequel la crémaillère (2, 2a, 2b) est balayée optiquement le long de son parcours par un capteur optique (3) écarté de la crémaillère (2, 2a, 2b) pour la détection des données géométriques de la crémaillère, dans lequel dans

    - une première étape de mesure, la crémaillère (2, 2a, 2b) est mesurée à l'état détendu reposant dans au moins une piste le long du parcours de celle-ci pour la détection des torsions et déformations de la crémaillère et dans
    - une seconde étape de mesure, la crémaillère (2, 2a, 2b) est serrée ou tendue mécaniquement ou magnétiquement dans une position définie reposant contre une face définie pour l'élimination de torsions et distorsions dans au moins une piste le long du parcours de celle-ci ; dans lequel la première étape de mesure est compensée avec la seconde étape de mesure dans un procédé différentiel, par lequel la torsion et courbure déviant de la mesure idéale de la crémaillère est calculée.

**7.** Procédé selon la revendication 6,
**caractérisé en ce**
**qu'**au moins une piste le long du côté de denture (21) et une piste le long d'une face latérale (22) adjacente au côté de denture est mesurée dans un ou plusieurs déplacement(s) de mesure.

**8.** Procédé selon la revendication 6 ou 7,

**caractérisé en ce**
**qu'**au moins dans une des étapes de mesure, un premier trajet de mesure s'effectue au moyen du capteur optique (2) de 90° contre la face à mesurer,
et s'effectue dans un second trajet de mesure au moyen du capteur optique (2) à un angle inférieur ou supérieur à 90° contre la face à mesurer.

**9.** Procédé selon une des revendications 6 à 8,
**caractérisé en ce**
**qu'**un ou plusieurs capteurs (3) sont agencés et une tête de mesure d'interférence (31) est utilisée en tant qu'au moins un capteur (3).

a)                              b)

**Fig. 1**

**Fig. 2**

14

21a

Tn

G

**Fig. 3**

β

Tn

21b

Tst

S

**Fig. 4**

**Fig. 5**

16

Fig. 6

**Fig. 7**

**Fig. 8**

Fig. 9

**Fig.10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2055403 A2